(19) Europäisches Patentamt / European Patent Office / Office européen des brevets

(11) **EP 2 455 233 B1**

(12) **EUROPEAN PATENT SPECIFICATION**

(45) Date of publication and mention
of the grant of the patent:
**07.08.2013 Bulletin 2013/32**

(51) Int Cl.:
***B60C 9/26*** *(2006.01)*

(21) Application number: **11189955.5**

(22) Date of filing: **21.11.2011**

(54) **Pneumatic tire comprising a zigzag belt structure**

Luftreifen mit Zickzackgürtelstruktur

Pneu comportant une structure de sommet en zigzag

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2010 US 416482 P**
**21.09.2011 US 201113238592**

(43) Date of publication of application:
**23.05.2012 Bulletin 2012/21**

(73) Proprietor: **The Goodyear Tire & Rubber Company Akron, OH 44316-0001 (US)**

(72) Inventors:
• **Georges, Francois Pierre Charles**
  **B-4970 Stavelot (BE)**
• **Nicolas, Bernard Robert**
  **B-6700 Arlon (Bonnert) (BE)**
• **Mathonet, Vincent Benoit**
  **B-6720 Habay-la-Neuve (BE)**
• **Krier, Roland Willibrord**
  **L-6622 Wasserbillig (LU)**

(74) Representative: **Kutsch, Bernd**
  **Goodyear SA**
  **Patent Department**
  **Avenue Gordon Smith**
  **7750 Colmar-Berg (LU)**

(56) References cited:
**EP-A1- 2 202 095**

## Description

Field of the Invention

This invention relates to a pneumatic tire having a carcass and a belt reinforcing structure, and, more particularly, to radial ply tires for use in aircraft, trucks and other high load applications.

Background of the Invention

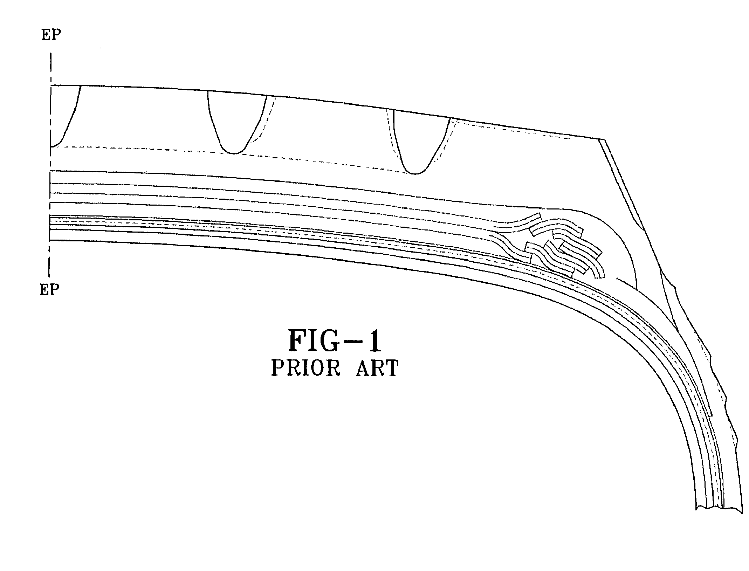

In tires that have heavy loads such as truck tires or aircraft tires, zigzag belt layers have been utilized for the belt package. Zigzag belt layers eliminate cut belt endings at the shoulder. An exemplary portion of a tire with a zigzag belt layer 5 is shown in Figure 1. The advantage of zigzag belt layers is that there are no cut belt edges near the shoulder, which greatly improves tire durability. The disadvantage to zigzag belt layers is that at the edges near the shoulder, there are overlapping layers. In some areas there are too many layers, such as 4 or more layers typically, and even 6 or more layers in some locations. The reduction of overlapping strips in the shoulder area has been shown to improve durability. Thus it is desired to have a tire with improved belt edge durability without excess weight.

EP-A- 2 202 095 describes a tire in accordance with the preamble of claim 1 with L=2 and N=1.

Summary of the Invention

The invention relates to a tire in accordance with claim 1 and to a method in accordance with claim 12.

Dependent claims refer to preferred embodiments of the invention.

In case of N=2 and L=2, the belt structure includes a zigzag belt structure formed of at least two layers of cords interwoven together from a strip of rubber reinforced with one or more cords, wherein the strip forming the zigzag belt structure is layed up in a first zigzag winding pattern per drum revolution, wherein the first winding pattern has the sequence W2W1 repeated 2 times, wherein W1 is a first amplitude and W2 is a second amplitude different than the first amplitude, said zigzag belt structure further comprising a second winding pattern having the sequence W1W2 repeated 2 times.

In case of N=4 and L=3, the belt structure includes a zigzag belt structure formed of at least two layers of cords interwoven together from a strip of rubber reinforced with one or more cords, wherein the strip forming the zigzag belt structure is layed up in a first zigzag winding pattern per drum revolution, wherein the first winding pattern has the sequence W3W1 and is repeated 4 times per drum revolution and a second winding pattern having a sequence W2W2 repeated 4 times per drum revolution, and a third winding pattern having a sequence W1W3 repeated 4 times per drum revolution, wherein W1 is a first amplitude and W2 is a second amplitude different than the first amplitude, and W3 is a third amplitude different than the first and second amplitude.

The belt structure may include the zigzag belt alone or together with a pair of preferably crossed working belts, wherein the angles of the working belts preferably range from 15 degrees to 30 degrees. The working belts may be on top or below the zigzag belt structure. In one aspect of the invention, the axial width of the crossed working belts is lower than the axial width of the zigzag belt such as 80% to 95% of the zigzag belt width. In an other aspect of the invention, the axial width of the crossed working belts is larger than the axial width of the zigzag belt such as 101 % to 115% of the zigzag belt width.

The belt structure may further include the zigzag belt together low angle belt wherein the angle of the low angle belt is in a range of from 0 degrees to 10 degrees such as 1 degree. The low angle belt may be on top or below the zigzag belt. In one aspect of the invention, the axial width of the low angle belt is lower than the axial width of the zigzag belt such as 50% to 80% of the zigzag belt width. In an other aspect of the invention, the axial width of the low angle belt is larger than the axial width of the zigzag belt such as 101 % to 115% of the zigzag belt width.

Definitions

"Axial" and "axially" mean lines or directions that are parallel to the axis of rotation of the tire.
"Carcass" means the tire structure apart from the belt structure, tread, undertread, and sidewall rubber over the plies, but including the beads.
"Circumferential" means lines or directions extending along the perimeter of the surface of the annular tread perpendicular to the axial direction.
"Cord" means one of the reinforcement strands of which the plies in the tire are comprised.
"Equatorial plane (EP)" means the plane perpendicular to the tire's axis of rotation and passing through the center of its tread.

"Winding" means the pattern of the strip formed in a first revolution of the strip around a tire building drum, tire or core.

Brief Description of the Drawings

The invention will be described by way of example and with reference to the accompanying drawings in which:

FIG. 1 is a schematic sectional view of part of a prior art tire having a zigzag belt;
FIG. 2 illustrates a partial cross-section of an exemplary radial tire of the present invention;
FIG. 3 is an example of a tire building drum showing the belt of the present invention being formed;
FIG. 4 is a first embodiment of a zigzag belt configuration;
FIG. 5 is a second embodiment of a zigzag belt configuration; and
FIG. 6 is a third embodiment of a zigzag belt configuration.

Detailed Description of an Example Embodiment the Invention

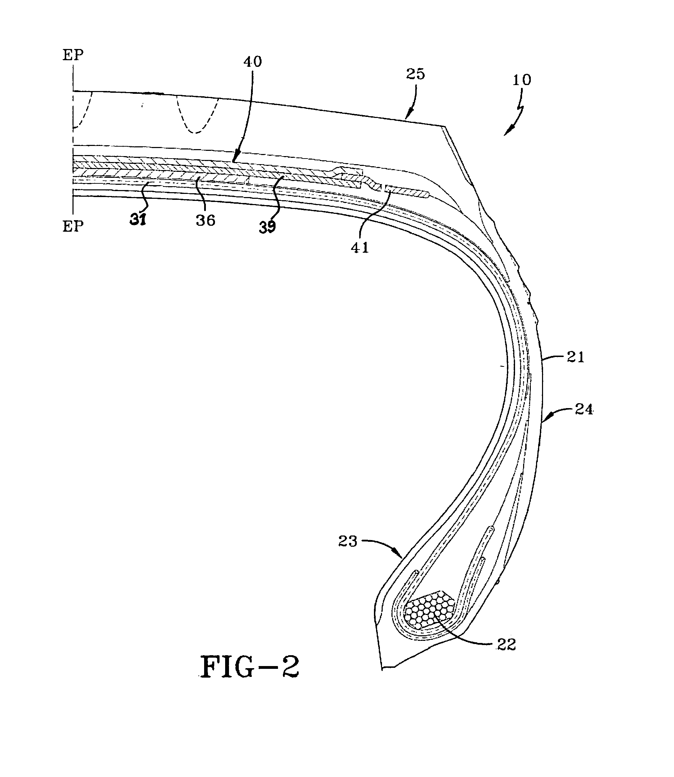

FIG. 2 illustrates a partial cross-section of an exemplary radial tire 10 which includes a bead portion 23 having a bead core 22 embedded therein, a sidewall portion 24 extending radially outward from the bead portion 23, and a cylindrical tread portion 25 extending between radially outer ends of the sidewall portions 24. The tire 10 is reinforced by a carcass 31 toroidally extending from one bead portion 23 to the other bead portion 23' (not shown). The carcass 31 may include at least one carcass ply 32. The carcass ply 32 is anchored to the bead core and for example, may wind around each bead core 22 from inside of the tire 10 away from the equatorial plane EP to form turnup portions. A belt reinforcement package 40 is arranged between the carcass 31 and the tread portion 25.

The belt reinforcement package 40, according to an example embodiment of the present invention, includes a low angle belt 36. Belt 36 has a width in the range of 50% to 100% of the tread arc width, more preferably 51-75%. The breaker angle of belt 36 is between 0 and 10 degrees, preferably with a left orientation, more preferably in the range of 0 to 5 degrees. The belt angles are measured with respect to the circumferential direction. Belt 36 is preferably made of steel formed in a high elongation construction such as, for example, 3x 7x 0.22 HE (HE = high elongation), and having an EPI (EPI = ends per 2.54 cm) in the range of 1 to 18. The high elongation wire may have a % elongation at 10% of the breaking load ranging from about 1.7- 2.05 % for a bare, green cord. The high elongation wire may have a % elongation at 10% of the breaking load ranging from 0.45-0.68% taken from cured tire. Another example of a cord construction suitable for the invention is made of steel having a 4x7x0.26 HE construction, with an EPI of 18.

In a preferred embodiment, however, the belt reinforcement package 40 does not include the low angle belt 36.

The belt structure 40 comprises a zigzag belt structure 39 which is preferably located radially outward of the low angle belt 36, if there is such a low angle belt 36. However, as explained above, the belt structure does not include such a low angle belt. The zigzag belt 39 may be formed from using any of the zigzag patterns as described below. Preferably, the zigzag belt structure has 0.2 or more zigzag waves per drum revolution. The belt width of the zigzag belt is preferably in the range of 70% to 80% of the tread arc width, and even more preferably in the range of 73-77%. The zigzag belt 39 may be steel formed in a high elongation construction such as, for example, 3x 7x 0.22 HE, and having an EPI of 14. The high elongation wire may have a % elongation at 10% of the breaking load ranging from 1.7- 2.05 % for a bare, green cord. The high elongation wire may have a % elongation at 10% of the breaking load ranging from 0.45-0.68 % taken from cured tire. Another example of a cord construction suitable for the invention is made of steel having a 4x7x0.26 HE construction, with an EPI of 18.

Alternatively, the zigzag belt may be nonmetal. One example of a nonmetal cord which may be used is aramid, having for instance a 1670/3 construction with a density of 24 EPI (ends per 2.54 cm). The aramid may also have a 3300/3 construction with an EPI of 24. The % elongation at 10% of breaking load for a bare cord typically is 0.98%.

It is preferred that the zigzag belt be formed of a cord having a rigidity or stiffness which is defined as follows. The rigidity is analogous to a spring having an equation F=KX, wherein F is the force by unit of the transversal width of the strip (N/2.54 cm); K is the rigidity of force per transverse width divided by the % elongation in the longitudinal direction, (N/2.54 cm) and X is the relative % elongation in the longitudinal direction. Thus on a plot of force/transverse width vs. % relative elongation, the rigidity would equal the slope of the curve. It is desired to select a cord and cord density in the transversal direction (EPI) providing a strip rigidity in the range of about 300,000 N/2.54 cm to about 800,000N/2.54 cm, and more preferably in the range of about 350,000 to about 750,000 N/2.54 cm. The cord properties as described above are measured using a cord taken from a cured tire.

The aspect ratio of the tire described above may vary. The aspect ratio is preferably in the range of 50 to 90. The tire may have a net to gross ratio in the range of 70 to 90, more preferably in the range of 74 to 86, more preferably 78 to 84.

ZigZag Belt Construction

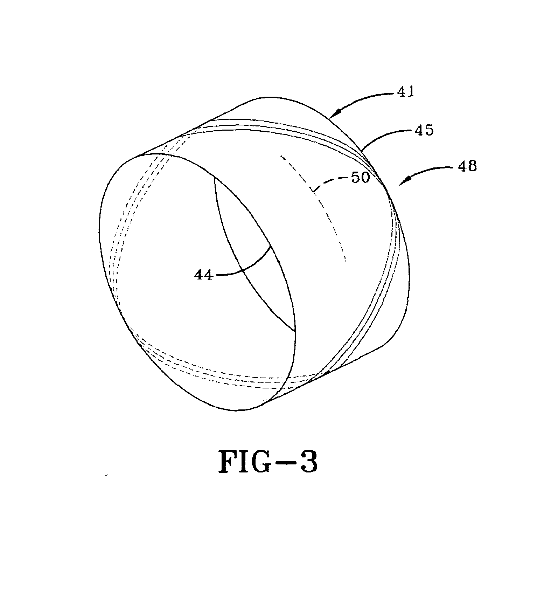

Figure 3 illustrates a tire building drum 48 having axial circumferential edges 44, 45. In order to form the modified zigzag belt structure 39 on the tire building drum, the tire building drum is rotated as a rubberized strip 43 of cord is wound around the drum in a generally circumferential direction, extending in an alternating fashion from one drum edge 44 to the other drum edge 45.

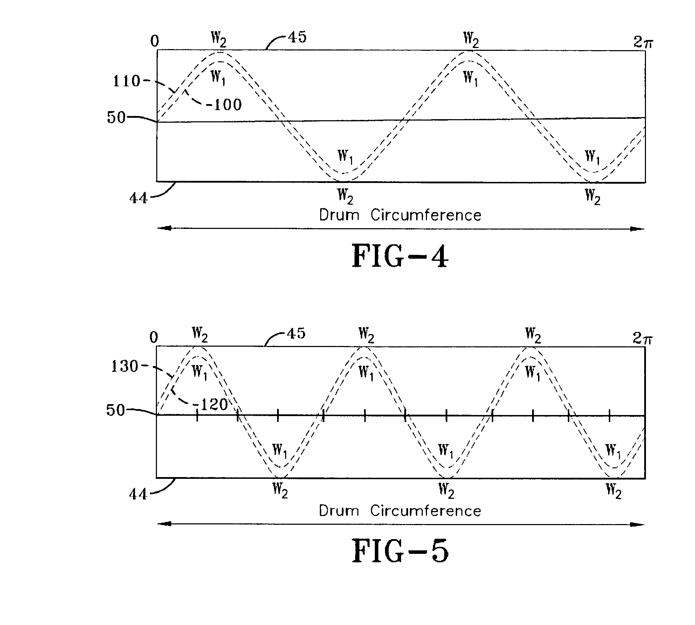

Figure 4 illustrates the tire building drum wherein the circumference of the drum is laid out flat for illustration purposes, from 0 radians (degrees) to $2\pi$ radians (360 deg). A first winding 100 for a first drum revolution of the zigzag belt is shown. For illustration purposes, the initial starting point 50 will be the mid-circumferential centerplane of the drum at 0 radians, however any starting point location may be used. A strip of rubber having two or more reinforcement cords is wound on the drum from one side of the drum 45 to the other side in a wave pattern. As shown, there are two zigzag waves per drum circumference. The first strip winding 100 has a first amplitude W1 at the drum edge 45 and a second amplitude W2 at the other drum edge 44, wherein W2 ≠ W1. The sequence of the first strip winding is continued, so that the winding has an amplitude W1 at $5/4\pi$ and then an amplitude of W2 at $7/4\ \pi$. Thus, the first winding has the following shorthand notation of the amplitude sequence: W2W1W2W1.

A second winding is then laid upon the drum. The strip may or may not be slightly indexed from the starting point 50. The second winding 110 has a first amplitude W2 at the drum edge 45, which is different than the amplitude of the first winding. The second winding has a second amplitude W1 at the drum edge 44, and the sequence continues so that the shorthand notation of the second winding is as follows: W1W2W1W2. The above sequence is repeated, indexing the starting point of the strip as needed so that the zigzag layer fully covers the drum in a uniform manner.

Figure 5 illustrates a second embodiment of the invention wherein each zigzag winding 120, 130 has three waves per drum revolution (N=3). The first winding 120 has a zigzag pattern for L=2 and i = 1 of W2W1 W2W1 W2W1, wherein W1 and W2 represent the amplitudes of the waves and wherein W1 is different than W2. The second winding 130 has a zigzag winding pattern (i=2) of W1W2 W1W2 W1W2. The above sequence is repeated, indexing the starting point of each strip winding as needed so that the zigzag layer fully covers the drum in a uniform manner.

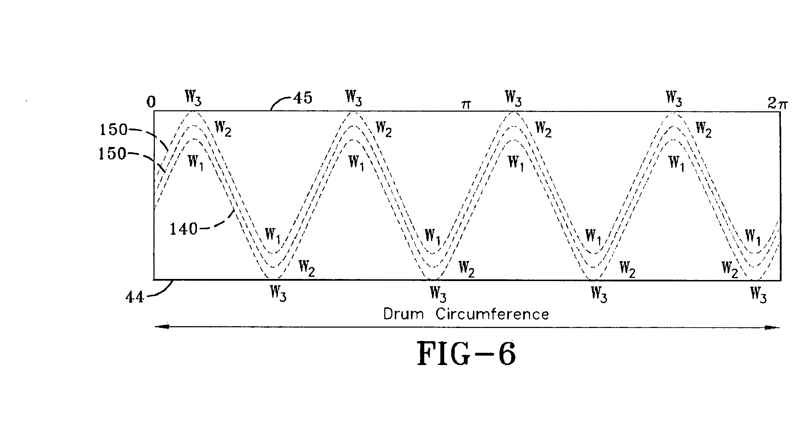

Figure 6 illustrates a third embodiment of the invention wherein the zigzag layer is formed of a sequence of three different windings 140, 150, 160 wherein each winding has four waves per drum revolution (N=4). The first winding 140 (i=1) has the amplitude pattern W3W1 repeated four times over 1 drum revolution, or W3W1 W3W1 W3W1 W3W1. The second winding 150 (i=2) has the amplitude pattern W2W2 repeated four times, i.e., W2W2 W2W2 W2W2 W2W2 over 1 drum revolution. The third winding 160 has the amplitude pattern W1W3 repeated four times over 1 drum revolution, or W1W3 W1W3 W1W3 W1W3.

If **N** is the number of zigzags cycles per drum revolution and **L** is the number of different amplitudes used in the zigzag layer, then the sequence of amplitudes (W) defining a complete zigzag cycle per drum revolution is given by:

$$\text{for } i = 1 \text{ to } L,$$

$$W_{L-(i-1)}\ W_i \qquad \text{repeated N times for one revolution}$$

N is the number of zigzag cycles per revolution and N is either an integer > 1, i.e. 2, 3, 4, 5, ..... or N = $1/a^n$ wherein n is an integer $\geq$ 1 and a is a number > 1, i.e. N= 1/2, 1/4, 1/8, ...

This sub-sequence is repeated **N** times per winding. After the drum has done one revolution, the drum is preferably indexed a small rotation to offset the strip circumferentially. Then, i is incremented. A second sequence is determined and then repeated the number of times needed to fully complete the zigzag lay-up. L is preferably 2 or more.

The strip is formed of a rubberized ribbon of one or more cords. The width of the strip may vary, and may be for example, about 5-14 mm wide, and more preferably about 10-13 mm wide. The cord reinforcements may be formed of nylon, polyester, aramid or steel. The invention as described above may also abut the strips, thus having no gap in spacing of consecutive windings. Alternatively, the successive winding of strips may be overlapped from 1% to 100% of the strip width. Alternatively, the successive winding of strips may have a gap distance G formed therebetween. G may vary from 1% to 100% of the strip width.

**Claims**

1.  A pneumatic tire comprising a tread (25), a carcass (31) and a belt structure (40) interposed between the carcass (31) and the tread (25), wherein the belt structure (40) includes a zigzag belt structure (39) formed of at least two layers of cords interwoven together from a strip of rubber reinforced with one or more cords, wherein the strip forming the zigzag belt structure (39) is laid up in a winding pattern in accordance with the following formula: for i =1 through L, the $i^{th}$ winding cycle is: $[W_{L-(i-1)}W_i] \times N$ for each revolution, wherein L is the number of different amplitudes $W_1$, .... $W_L$ used to define the zigzag belt structure (39) and $L \geq 2$, and N is the number of zigzag cycles per revolution, **characterized in that**

    (i) L > 2; or
    (ii) N > 1 or $N = 1/a^n$, wherein n is an integer $\geq 1$ and a is a number >1.

2. The tire of claim 1 wherein N is an integer > 1 such as 2, 3, 4 or 5.

3. The tire of claim 1 wherein n is >1 such as 2, 3, 4 or 5.

4. The tire of claim 1 or 3 wherein a is 2, 3, 4 or 5.

5. The tire in accordance with claim 1 wherein the zigzag belt structure (39) comprises a first zigzag winding cycle per revolution, wherein the first winding cycle has the sequence W2W1 repeated 2 times, wherein W1 is a first amplitude and W2 is a second amplitude different than the first amplitude, and wherein the zigzag belt structure (39) comprises a second winding cycle having the sequence W1W2 repeated 2 times.

6. The tire in accordance with claim 1 wherein the zigzag belt structure (39) comprises a first zigzag cycle per revolution, wherein the first winding cycle has the sequence W3W1 and is repeated 4 times per revolution and a second winding cycle having a sequence W2W2 repeated 4 times per revolution, and a third winding cycle having a sequence W1W3 repeated 4 times per drum revolution, wherein W1 is a first amplitude, W2 is a second amplitude different than the first amplitude, and W3 is a third amplitude different than the first and second amplitude W1, W2.

7. The tire of claim 5 or 6 wherein the second zigzag winding abuts the first zigzag winding.

8. The tire of at least one of the previous claims wherein the zigzag belt structure (39) has a width equal to the tread arc width or equal to the tread arc width +/- 5% or wherein the zigzag belt structure (39) has a width in the range of from 65% to 100%, alternatively from 70% to 80%, of the tread arc width.

9. The tire of at least one of the previous claims wherein the zigzag belt (39) is formed of a cord having a % elongation at 10% of breaking load greater than 0.45%, when taken from wire from a cured tire.

10. The tire of at least one of the previous claims wherein the belt structure (40) further includes two crossed working belts underlying or overlaying the zigzag belt structure (39); and/or wherein the belt structure (40) includes a low angle belt (36) wherein the angle of the low angle belt is in a range of from 0 degrees to 10 degrees, the low angle belt (36) preferably overlaying the zigzag belt structure (39).

11. The tire of claim 10 wherein the low angle belt (36) has a width of 50 % to 80% of the zigzag belt structure (39).

12. A method of manufacturing a zigzag belt structure (39) on a drum, the method comprising forming the zigzag belt structure (39) from at least two layers of cords interwoven together from a strip of rubber reinforced with one or more cords, wherein the strip forming the zigzag belt structure (39) is laid up in a winding pattern in accordance with the following formula: for i =1 through L, the $i^{th}$ winding cycle is: $[W_{L-(i-1)}W_i] \times N$ for each drum revolution, wherein L is the number of different amplitudes $W_1$, .... $W_L$ used to define the zigzag belt structure (39) and $L \geq 2$, and N is the number of zigzag cycles per drum revolution, **characterized in that**

    (i) L>2; or
    (ii) N > 1 or $N = 1/a^n$, wherein n is an integer $\geq 1$ and a is a number > 1.

**Patentansprüche**

1. Luftreifen, umfassend eine Lauffläche (25), eine Karkasse (31) und eine zwischen die Karkasse (31) und die Lauffläche (25) eingefügte Gürtelstruktur (40), wobei die Gürtelstruktur (40) eine Zickzackgürtelstruktur (39) umfasst, die aus mindestens zwei Lagen von Korden gebildet ist, die aus einem Streifen aus Gummi, der mit einem oder mehr Korden verstärkt ist, ineinander verwoben sind, wobei der Streifen, der die Zickzackgürtelstruktur (39) bildet, in einem Wickelmuster gemäß der folgenden Formel aufgelegt ist: für i = 1 bis einschließlich L ist der i-te Wicklungszyklus: $[W_{L-(i-1)}W_i]$ x N für jede Umdrehung, wobei L die Anzahl verschiedener Amplituden $W_1$, ... $W_L$ ist, die verwendet werden, um die Zickzackgürtelstruktur (39) zu definieren, und L $\geq$ 2, und N die Anzahl von Zickzackzyklen je Umdrehung ist, **dadurch gekennzeichnet, dass**

(i) L > 2; oder
(ii) N > 1 oder N = $1/a^n$, wobei n eine ganze Zahl $\geq$ 1 ist und a eine Zahl > 1 ist.

2. Reifen nach Anspruch 1, wobei N eine ganze Zahl > 1 ist, wie etwa 2, 3, 4 oder 5.

3. Reifen nach Anspruch 1, wobei n > 1 ist, wie etwa 2, 3, 4 oder 5.

4. Reifen nach Anspruch 1 oder 3, wobei a 2, 3, 4 oder 5 ist.

5. Reifen gemäß Anspruch 1, wobei die Zickzackgürtelstruktur (39) einen ersten Zickzackwickelzyklus je Umdrehung umfasst, wobei bei dem ersten Wickelzyklus die Sequenz W2W1 2 Mal wiederholt wird, wobei W1 eine erste Amplitude ist und W2 eine zweite Amplitude verschieden von der ersten Amplitude ist, und wobei die Zickzackgürtelstruktur (39) einen zweiten Wickelzyklus umfasst, bei dem die Sequenz W1 W2 2 Mal wiederholt wird.

6. Reifen gemäß Anspruch 1, wobei die Zickzackgürtelstruktur (39) einen ersten Zickzackzyklus je Umdrehung umfasst, wobei der erste Wickelzyklus die Sequenz W3W1 aufweist und 4 Mal je Umdrehung wiederholt wird und ein zweiter Wickelzyklus mit einer Sequenz W2W2 4 Mal je Umdrehung wiederholt wird und ein dritter Wickelzyklus mit einer Sequenz W1W3 4 Mal je Trommelumdrehung wiederholt wird, wobei W1 eine erste Amplitude ist, W2 eine zweite Amplitude verschieden von der ersten Amplitude ist und W3 eine dritte Amplitude verschieden von der ersten und zweiten Amplitude W1, W2 ist.

7. Reifen nach Anspruch 5 oder 6, wobei die zweite Zickzackwicklung an die erste Zickzackwicklung grenzt.

8. Reifen nach mindestens einem der vorgenannten Ansprüche, wobei die Zickzackgürtelstruktur (39) eine Breite gleich der Laufflächenkonturbreite oder gleich der Laufflächenkonturbreite +/- 5% aufweist, oder wobei die Zickzackgürtelstruktur (39) eine Breite im Bereich von 65% bis 100%, alternativ von 70% bis 80%, der Laufflächenkonturbreite aufweist.

9. Reifen nach mindestens einem der vorgenannten Ansprüche, wobei die Zickzackgürtelstruktur (39) aus einem Kord gebildet ist, der einen Verlängerungsprozentsatz bei 10% Bruchlast von größer als 0,45% aufweist, genommen von Draht von einem vulkanisierten Reifen.

10. Reifen nach mindestens einem der vorgenannten Ansprüche, wobei die Gürtelstruktur (40) weiter zwei gekreuzte Arbeitsgürtel aufweist, die unter oder über der Zickzackgürtelstruktur (39) liegen; und/oder wobei die Gürtelstruktur (40) einen Gürtel (36) mit niedrigem Winkel beinhaltet, wobei der Winkel des Gürtels mit niedrigem Winkel in einem Bereich von 0 Grad bis 10 Grad liegt, wobei der Gürtel (36) mit niedrigem Winkel bevorzugt über der Zickzackgürtelstruktur (39) liegt.

11. Reifen nach Anspruch 10, wobei der Gürtel (36) mit niedrigem Winkel eine Breite von 50% bis 80% der Zickzackgürtelstruktur (39) aufweist.

12. Verfahren zur Herstellung einer Zickzackgürtelstruktur (39) auf einer Trommel, wobei das Verfahren das Formen der Zickzackgürtelstruktur (39) aus mindestens zwei Lagen von Korden, die aus einem Streifen aus Gummi, der mit einem oder mehr Korden verstärkt ist, ineinander verwoben sind, umfasst, wobei der Streifen, der die Zickzackgürtelstruktur (39) bildet, in einem Wickelmuster gemäß der folgenden Formel aufgelegt wird: für i = 1 bis einschließlich L ist der i-te Wicklungszyklus: $[W_{L-(i-1)}W_i]$ x N für jede Trommelumdrehung, wobei L die Anzahl verschiedener Amplituden $W_1$, ... $W_L$ ist, die verwendet werden, um die Zickzackgürtelstruktur (39) zu definieren, und L $\geq$ 2, und N die Anzahl von Zickzackzyklen je Trommelumdrehung ist, **dadurch gekennzeichnet, dass**

(i) L > 2; oder
(ii) N > 1 oder N = $1/a^n$, wobei n eine ganze Zahl $\geq$ 1 ist und a eine Zahl > 1 ist.

**EP 2 455 233 B1**

**Revendications**

1. Bandage pneumatique comprenant un bande de roulement (25), une carcasse (31) et une structure de ceinture (40) intercalée entre la carcasse (31) et la bande de roulement (25), dans lequel la structure de ceinture (40) englobe une structure de ceinture en zigzag (39) constituée par au moins deux couches de câblés entrelacées l'une avec l'autre à partir d'une bande de caoutchouc renforcé avec un ou plusieurs câblés, dans lequel la bande formant la structure de ceinture en zigzag (39) est placée dans un motif d'enroulement conformément à la formule indiquée ci-après : pour i = 1 à L, le ième cycle d'enroulement est : $[W_{L-(i-l)}W_i] \times N$ pour chaque révolution, L représentant le nombre de différentes amplitudes $W_l$, ... $W_L$ que l'on utilise pour définir la structure de ceinture en zigzag 39 et $L \geq 2$, N représentant le nombre de cycles de zigzag par révolution, **caractérisé en ce que**

   (i) L>2;ou
   (ii) N > 1 ou $N = l/a^n$ où n représente un entier $\geq$ 1 et a représente un nombre > 1.

2. Bandage pneumatique selon la revendication 1, dans lequel N représente un entier > 1, tel que 2, 3, 4, ou 5.

3. Bandage pneumatique selon la revendication 1, dans lequel n est > 1, tel que 2, 3, 4, ou 5.

4. Bandage pneumatique selon la revendication 1 ou 3, dans lequel a est égal à 2, 3, 4, ou 5.

5. Bandage pneumatique selon la revendication 1, dans lequel la structure de ceinture en zigzag (39) comprend un premier cycle d'enroulement en zigzag par révolution, le premier cycle d'enroulement possédant la séquence W2W1 répétée deux fois, dans laquelle W1 représente une première amplitude et W2 représente une deuxième amplitude différente de la première amplitude, et dans lequel la structure de ceinture en zigzag (39) comprend un deuxième cycle d'enroulement possédant la séquence W1W2 répétée deux fois.

6. Bandage pneumatique selon la revendication 1, dans lequel la structure de ceinture en zigzag (39) comprend un premier cycle d'enroulement en zigzag par révolution, le premier cycle d'enroulement possédant la séquence W3W1 que l'on répète quatre fois par révolution, un deuxième cycle d'enroulement possédant la séquence W2W2 que l'on répète quatre fois par révolution et un troisième cycle d'enroulement possédant la séquence W1W3 que l'on répète quatre fois par révolution du tambour, W1 représentant une première amplitude, W2 représentant une deuxième amplitude différente de la première amplitude, et W3 représentant une troisième amplitude différente de la première et de la deuxième amplitude W1, W2.

7. Bandage pneumatique selon la revendication 5 ou 6, dans lequel le deuxième enroulement en zigzag vient buter contre le premier enroulement en zigzag.

8. Bandage pneumatique selon au moins une des revendications précédentes, dans lequel la structure de ceinture en zigzag (39) possède une largeur égale à la largeur d'arc de bande de roulement ou bien égal à la largeur d'arc de bande de roulement $\pm$ 5 %, ou dans lequel la structure de saturant zigzag (39) possède une largeur dans la plage de 65 % à 100 %, en variante de 70 % à 80 % de la largeur d'arc de bande de roulement.

9. Bandage pneumatique selon au moins une des revendications précédentes, dans lequel on forme la structure de ceinture en zigzag (39) à partir d'un câblé possédant un allongement en %, à 10 % de la charge de rupture, supérieur à 0,45 % lorsqu'il provient d'un fil métallique issu de bandage pneumatique vulcanisé.

10. Bandage pneumatique selon au moins une des revendications précédentes, dans lequel la structure de ceinture (40) englobe en outre deux ceintures de travail croisées sous-jacentes ou sus-jacentes à la structure de ceinture en zigzag (39) ; et/ou dans lequel la structure de ceinture (40) englobe une ceinture faiblement angulaire (36), l'ongle formé par la ceinture faiblement angulaire se situant dans la plage de 0° à 10°, la ceinture faiblement angulaire (36) recouvrant de préférence la structure de ceinture en zigzag (39).

11. Bandage pneumatique selon la revendication 10, dans lequel la ceinture faiblement angulaire (36) possède une largeur qui représente de 50 % à 80 % celle de la structure de ceinture en zigzag (39).

12. Procédé de confection d'une structure de ceinture en zigzag (39) sur un tambour, le procédé comprenant la formation de la structure de ceinture en zigzag (39) à partir d'au moins deux couches de câblés entrelacées l'une avec l'autre à partir d'une bande de caoutchouc renforcé avec un ou plusieurs câblés, dans lequel la bande formant la structure

7

de ceinture en zigzag (39) est placée dans un motif d'enroulement conformément à la formule indiquée ci-après : pour i = 1 à L, le ième cycle d'enroulement est : $[W_{L-(i-l)}W_i]$ X N pour chaque révolution, L représentant le nombre de différentes amplitudes $W_l$, ... $W_L$ que l'on utilise pour définir la structure de ceinture en zigzag 39 et L $\geq$ 2, N représentant le nombre de cycles de zigzag par révolution, **caractérisé en ce que**

(i) L > 2 ; ou
(ii) N > 1 ou N = l/$a^n$ où n représente un entier $\geq$ 1 et a représente un nombre > 1.

EP 2 455 233 B1

FIG-1
PRIOR ART

9

EP

40                    25            10

31        36        39

EP

41

21

24

23

22

FIG-2

FIG-3

FIG-4

FIG-5

EP 2 455 233 B1

EP 2 455 233 B1

FIG-6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2202095 A